# EUROPEAN PATENT APPLICATION

(11) **EP 0 710 570 A1**
(43) Date of publication of application: **08.05.1996**
(21) Application number: 95116988.7
(22) Date of filing: 27.10.1995
(51) Int. Cl.: B41M 1/30, C08K 3/04, C08L 23/02, H01B 13/00, B41M 5/26, G06K 1/12

(54) **Polymeric composition and process of laser beam printing the surface of said composition**

(30) Priority: 04.11.1994 US 334825; 07.06.1995 US 478726
(71) Applicant: QUANTUM CHEMICAL CORPORATION, Cincinnati, OH 45249 (US)
(72) Inventor: Lee, Lester Y., Hamilton, Ohio 45011 (US); Tonyali, Koksal, Cincinnati, Ohio 45241 (US); Roberts, David E., West Chester, Ohio 45069 (US)
(74) Representative: Grünecker, Kinkeldey, Stockmair & Schwanhäusser Anwaltssozietät

(57) **Abstract**

A process of laser beam printing a plastic article, conducted under laser beam printing conditions, said article comprising a laser beam printable polymeric composition. The composition includes an olefin polymer; between about 0.05% and about 1% carbon black; and, in the case of a composition exposed to outdoor environments, between about 0.01% and about 5% of at least one organic ultraviolet light inhibitor, said percentages being by weight, based on the total weight of the composition. In embodiments where the plastic surface is not exposed to outdoor environments, the laser beam printable composition does not include an organic ultraviolet light inhibitor. This process is particularly suited for use as plastic articles used to provide a sheathing for electrically conductive conduits.

## Description

The present invention is directed to a process of labelling a plastic article which comprises laser beam printing an olefin polymer-containing composition. More specifically, the present invention is directed to a process of laser beam printing an olefin polymer-containing composition which includes an olefin-containing polymer, carbon black and, in many applications, an ultraviolet light stabilizing agent.

Many plastics are used in applications where labelling or marking is required for identification and/or safety purposes. One of the most important of such applications is the labelling of insulated and/or jacketed conductors, including electrical and optical conductors. Such labelling is used, for example, to define the electrical use of wire or cable, its electrical characteristics and the like. There are, of course, any number of other applications which require that a polymer's surface be labelled. For example, expiration dates, bar codes, serial numbers, labels, company names and logos and the like are oftentimes essential or at least desirable.

The prior art addresses the need for plastic product labelling. Thus, such methods as pad printing, ink-jet printing, embossing and stamping are currently employed to provide marking of plastic products. However, all of these methods suffer from a combination of slow processing, lack of labelling durability and the absence of resistance to marring.

Recently, a new method of labelling plastic products has been introduced. This method, laser beam printing, represents an advance in the art of labelling plastic products. Laser beam printing is a non-contact process, thus eliminating problems associated with mechanical wear. Processing costs are minimal. Of great importance is that this process is conducted in the absence of ink.

As those skilled in the art are aware, marring of printed or labelled plastic products is a major problem in the plastic labelling art. Inks are subject to marring caused by simple rubbing, let alone abrasive wear. The plastic itself may be designed for use in environments wherein the plastic contacts solvents. Although the plastic would obviously be inert to the solvent, the ink may dissolve therein. Independent of the above adverse factors, the ink may be required to be applied in a solvent whose use may create environmental and safety hazards.

Although laser beam printing provides additional improvements, such as the absence of any need to pretreat the surface to be printed and the elimination of the problem of adhesion, for many plastics, this printing process cannot be used employing the plastic in the virgin state. Indeed, the only commercially important class of plastics which does not require the formulation of plastic compositions prior to laser beam printing is polyvinyl chloride. This leaves the problem of formulating a suitable composition, for the class of plastics which probably is commercially the most important in terms of labelling, polyolefin polymers.

This is so in that a major application of polyolefins is as wire and cable sheaths. Wire and cable sheathing is labelled to identify electrical wire service parameters. In the prior art wire and cable sheath was usually ink jet printed. This ink jet printing suffered from the absence of durability.

An early suggestion to overcome this durability problem was the employment of surface indentation to extend the useful life of the print. However, surface indentation is a slow, multi-step process which significantly complicates the printing procedure. Surface indentation, moreover, does not provide the necessary contrast. Even when surface indentation is back-filled with a colored wax to improve contrast, that wax can soften and flow even at relatively low temperatures.

To overcome all of these problems, the use of laser beam printing has been advanced to provide long lasting marking of polyolefin surfaces. This method eliminates many of the problems discussed above. The process of laser beam printing is fast and simple. It, moreover, provides a print of good durability. However, as stated earlier, because of the requirement that additives must be added to the olefin polymer alone or even that the olefin polymer composition designed for the application which requires labelling be further modified, this method has not significantly advanced. That is, laser beam printing of commercially important polyolefin compositions has, in the past, suffered by poor contrast and lack of uniformity. The above remarks establish a recognized need in the art for new processes employing laser beam printing which produces durable and uniform printing.

The employment of laser marking of thermoplastics is discussed in Smith, British Plastics and Rubber, 22 (November 1993). That general discussion of laser beam printing of thermoplastics states that only a few thermoplastics can be laser marked in their natural state. The use of pigments aids in providing the necessary contrast to other thermoplastics. However, it is specifically noted that polyolefins, as well as polyacetals and polyamides, require the use of carbon black to provide the necessary contrast, albeit at low levels. It is specifically stated that a deep black color is not obtainable.

This reference indicates that the use of carbon black at a concentration of 0.1% provides optimum contrast. The reference further indicates that concentrations above 0.3% produces unacceptably low contrast.

A Ciba-Geigy publication, "Carbon Black Effect on Applications" discloses the use of Ciba-Geigy ultraviolet (UV) light stabilizers in carbon black filled polyolefin compositions to enhance outdoor use by improving the composition's resistance to UV degradation. That publication recites a plurality of polyolefin compositions which include a wide variation of loading of carbon black and a Ciba-Geigy UV stabilizer, Tinuvin 622LD [trademark], whose structural formula is therein defined, in a polypropylene composition.

U.S. Patent Nos. 4,595,647 and 4,654,290 describe an encapsulating composition used as a covering of electronic devices. The composition comprises a plastic resin, a filler and a coloring material. The coloring material is titanium dioxide or a mixture of titanium dioxide and chromium oxide. Carbon black is optionally also present as part of the coloring material constituent. The filler is desirably silica and/or alumina. The plastic is recited to be an epoxy, a silicone resin or a polyimide. This composition is formulated to permit laser marking and have a high degree of color contrast.

The above teachings create a dilemma in the art. As those skilled in the cable and wire insulation and sheathing art are aware, carbon black is included in polymeric compositions used in wire and cable sheath applications in concentrations between about 2% and 3% by weight to ensure adequate ultraviolet light protection. Thus, the teaching of the prior art suggests the problem in the cable sheathing art of providing polyolefinic resin compositions suitable for laser beam printing that retain the ability to resist UV light.

A new process has now been developed which represents an advance in the art of laser printing of plastic surfaces. Specifically, a new process of laser printing of polymeric articles has been developed which provides laser beam marking characterized by excellent contrast and uniformity. Moreover, this process does not require that the plastic article or surface be compromised by changes in the composition that deleteriously affects other physical properties of the plastic.

For instance, in the important polyolefinic resin composition wire and cable jacketing application, a composition which is easily laser beam printed to produce a durable surface print, having excellent contrast and uniformity, is also characterized by the same excellent ultraviolet light inhibition characteristics associated with olefin polymer compositions used as wire and cable jacketing materials of the prior art. This improvement is, surprisingly, accompanied by improved insulating properties.

In accordance with the present invention, a first process of laser beam printing a plastic article is provided. That process comprises laser beam printing, under laser beam printing conditions, a plastic article formed of a laser beam printable polymeric composition which includes an olefin containing polymer; between about 0.05% and about 1% carbon black; and between about 0.01% and about 5% of at least one organic ultraviolet light stabilizer, said percentages being by weight, based on the total weight of the composition.

The present invention is further directed to a process of laser beam printing a plastic article comprising laser beam printing, under laser beam printing conditions, a multilayered article which includes a surface layer formed of a polymeric composition selected from the group consisting of (a) a first polymeric composition, said first polymeric composition including an olefin-containing polymer, between about 0.05% and about 1% carbon black and between about 0.01% and about 5% of at least one organic ultraviolet light stabilizer, said percentages being by weight, based on the total weight of said composition, and (b) a second polymeric composition, said second polymeric composition characterized by not being identical to said first polymeric composition and by being laser beam transparent with the proviso that if said surface layer is formed of said second polymeric composition the article includes a layer, disposed beneath said surface layer, formed of said first polymeric composition.

Still further, the present invention is directed to a process of insulating an electrical conductor with a laser beam printable plastic composition comprising covering an electrical conductor with a first polymeric composition which comprises an olefin-containing polymer; between about 0.05% and about 1% carbon black; and between about 0.05% and about 5% of at least one organic ultraviolet light stabilizer, said percentages being by weight, based on the total weight of the composition.

Still further, the present invention is directed to a process of jacketing optical fiber, electrically conductive wire or electrically conductive cable with a laser beam printable plastic composition comprising bundling a plurality of optical fibers, individually insulated electrically conductive wire or individually insulated electrically conductive cable to form a bundle; and covering said bundle with a laser beam printable first polymeric composition comprising an olefin-containing polymer, between about 0.05% and about 1% carbon black and between about 0.05% and about 5% of at least one organic ultraviolet light stabilizer, said percentages being by weight, based on the total weight of the composition.

Further yet, the present invention is directed to an electrically conductive assembly comprising an electrical conductor insulated with a laser beam printable sheathing comprising a first polymeric composition, said first polymeric composition comprising an olefin-containing polymer; between about 0.05% and about 1% carbon black; and between about 0.05% and about 5% of at least one organic ultraviolet light stabilizer, said percentages being by weight, based on the total weight of the composition.

Still further, the present invention is directed to a conductive assembly comprising a bundle of a plurality of conductors, said conductors selected from the group consisting of optical fibers, electrically insulated conductive wire, electrically insulated conductive cable and combinations thereof, and a sheathing covering said bundle, said sheathing comprising a laser beam printable first polymeric composition, said first polymeric composition comprising an olefin-containing polymer; between about 0.05% and about 1% carbon black; and between about 0.05% and about 5% of at least one organic ultraviolet light stabilizer, said percentages being by weight, based on the total weight of the composition.

The present invention is further directed to a process of laser beam printing a plastic article comprising laser beam printing, under laser beam printing conditions, an article comprising a laser beam printable polymeric composition which includes an olefin-containing polymer and between about 0.05% and about 1% carbon black, said percentages being by weight, based on the total weight of said composition.

The present invention is also directed to a polymeric composition comprising an olefin-containing polymer and between about 0.05% and about 1% carbon black, said percentages being by weight, based on the total weight of the composition.

The process of the present invention comprises the laser beam printing of plastic compositions. There are two major embodiments of this process within the contemplation of the present invention. However, independent of which of these embodiments is practiced, the laser beam printing step is common to all embodiments of the present process. In that step a marking laser having a wavelength of up to 2,000 nanometers (nm) is utilized to laser beam print the surface of a plastic article.

In view of the limitation that the laser generate a beam having a wavelength of no more than 2,000 nm, lasers that may be employed in the process of this invention include a neodymium:yttrium aluminum garnet solid state (Nd:YAG) laser wherein neodymium atoms (lasing media) are embedded in a yttrium aluminum garnet crystal host. Another acceptable laser is an excimer ultraviolet wavelength laser. Such lasers include an excimer argon fluoride (ArF) laser (193 nm), an excimer krypton fluoride (KrF) laser (248 nm), an excimer xenon fluoride (XeF) laser (351 nm) and an excimer xenon chloride (XeCl) laser (308 nm). Of these, a Nd:YAG laser operated at its fundamental 1,064 nm far infrared wavelength, its second harmonic 532 nm visible light wavelength or its fourth harmonic 266 nm ultraviolet wavelength, is preferred. More preferably, a Nd:YAG laser at its 532 nm or 1,064 nm wavelength is utilized. Most preferably, the laser beam marking process of this invention is laser beam marked with a Nd:YAG laser at its fundamental 1,064 nm wavelength.

The process of the present invention advances the art of laser beam printing of plastic articles by laser beam printing on a novel polymeric composition which includes an olefinic polymer. These compositions are not only designed to provide properties suited to the application for which they are used but, also, to provide an excellent substrate for the marking thereon of laser beam printing.

These compositions may be used alone or as an outer coating especially suited to accept laser beam marking over a composition that may not be especially suited to laser beam printing. Generally, the two uses of this composition do not affect the constituency of the composition. That is, the plastic compositions employed in the process of the present invention are the same whether employed as the laser beam marked plastic article or as the laser beam marked plastic composition coating of a plastic article. Whether the plastic composition is the entire article or a coating thereon, is primarily a function of whether the composition is properly suited to the application and secondarily, assuming its utility to that application, to the economics of utilizing the laser beam markable plastic composition in that application.

In addition to the two embodiments of the process of this invention, wherein the composition is the article itself or a coating for a plastic article, there is, additionally, a second major embodiment of the process of this invention. This second major embodiment of the process of this invention is also present in two embodiments. This second embodiment is distinguished from the first major embodiment in that it is directed to a process of laser beam printing plastic compositions employed in indoor environments rather than in outdoor environments, as is the first major embodiment.

As those skilled in the art are aware, plastics are subject to ultraviolet light-caused degradation. As such, plastic compositions utilized in outdoor environments usually include one or more ultraviolet light (UV) stabilizers. So it is in the process of the present invention. In the process of laser beam marking of plastic articles used in outdoor environments at least one UV stabilizer is present. A UV stabilizer need not be present in applications where the plastic article resides in an indoor or other environment not exposed to sunlight or other UV light.

Turning to the first two embodiments of the process of the present invention, a plastic article is laser beam marked either by fabricating the article from a first polymeric composition of the present invention to be discussed below or by coating a fabricated polymeric article with the first polymeric composition of the present invention followed by laser beam marking. Laser beam marking is accomplished using the laser beam step discussed earlier.

The first polymeric composition of the present application includes, as an essential ingredient, an olefinic polymer. The olefinic polymer may be an olefin homopolymer, a copolymer of an olefin and at least one copolymerizable monomer, an ionomer of an olefin and at least one copolymerizable monomer and mixtures thereof derived from one or more olefins having 2 to 12 carbon atoms. More preferably, the olefin polymers within the contemplation of the present invention are derived from olefins having 2 to 8 carbon atoms. Olefin polymers comprised predominantly of repeating units derived from ethylene and propylene, especially ethylene, is particularly preferred.

Highly useful homopolymers are homopolymers of olefins having 2 to 12, and more preferably, 2 to 8 carbon atoms. Especially preferred olefin homopolymers within the contemplation of the composition used in the process of this invention are homopolymers of α-olefins having 2 to 4 carbon atoms. Thus, homopolymers of polyethylene, polypropylene and polybutene are particularly preferred for use in the process of this invention.

Another important class of olefinic polymers within the contemplation of the compositions employed in the process of the present invention are copolymers of an olefin and at least one copolymerizable comonomer. Among the many classes of comonomers that can be utilized in the olefin copolymer composition are one or more other olefins. Preferably, when a copolymer of two or more olefins is utilized, the olefins, although different, contain from 2 to 12 carbon atoms. A particularly preferred class of olefin copolymers are copolymers of two or more α-olefins containing 2 to 12 carbon atoms.

In the particularly preferred embodiment, wherein two α-olefins constitute the copolymer, it is preferred that the α-olefins contain 2 to 8 carbon atoms. This particularly preferred class of olefin copolymers include copolymers referred to as linear low-density polyethylenes (LLDPEs). These polymers are copolymers predominantly of ethylene and a minor amount of a higher α-olefin of 3 to 12, preferably 3 to 8, carbon atoms. The most commonly employed LLDPEs are copolymers of ethylene and n-butene, copolymers of ethylene and n-hexene and copolymers of ethylene and n-octene.

Other preferred classes of copolymers, which include ethylene and a higher α-olefin of 3 to 12, preferably 3 to 8, carbon atoms, are the polymers, referred to in the cable jacketing art as low, medium and high density polyethylene. These polymers are similar to LLDPEs but for their density. That is, they are copolymers of a major amount of ethylene and a minor amount of higher α-olefin. Preferably, the higher α-olefin is n-butene, n-hexene or n-octene.

Still other preferred copolymers which include two α-olefins are copolymers of ethylene and propylene where the predominant concentration is propylene, ethylene-propylene rubber which constitutes a copolymer of ethylene and propylene where the ethylene component is present in a higher concentration, and a terpolymer of ethylene, propylene and a diene monomer (EPDM), a commonly employed thermosetting rubber.

Another preferred class of olefin copolymers within the scope of the process of the present invention is a copolymer of an olefin and a vinyl ester. Particularly preferred olefins useful in this copolymer are α-olefins of 2 to 12 carbon atoms. Still more preferably, the α-olefin monomer of the copolymer of an olefin and a vinyl ester is ethylene. Preferred vinyl esters include vinyl acetate, vinyl butyrate and the like. Included in this class of copolymers is a copolymer of an α-olefin and vinyl alcohol, the saponification product of a copolymer of an α-olefin and vinyl acetate. More preferably, this class of copolymer is one of ethylene and vinyl alcohol.

A preferred class of olefin copolymers within the general class of copolymers of α-olefins and vinyl esters is a terpolymer of an α-olefin, a vinyl ester and an unsaturated acid anhydride. A particularly preferred species within this class of terpolymers is a copolymer of ethylene, vinyl acetate and maleic anhydride.

Yet another class of olefin polymers within the scope of the composition used in the process of this invention is the class of copolymers of olefins and acrylates. Again, the preferred olefin is one of 2 to 12 carbon atoms, more preferably, 2 to 8 carbon atoms. More preferably, the olefin of 2 to 12 carbon atoms, or 2 to 8 carbon atoms, is an α-olefin. Most preferably, the α-olefin is ethylene.

The acrylate comonomer of this class of copolymers is preferably an alkyl acrylate or an alkyl methacrylate. Particularly preferred comonomers are alkyl acrylates or alkyl methacrylates wherein the alkyl contains 2 to 4 carbon atoms. Thus, copolymers of ethylene and methyl acrylate, copolymers of ethylene and ethyl acrylate, copolymers of ethylene and n-butyl acrylate, copolymers of ethylene and methyl methacrylate and copolymers of ethylene and ethyl methacrylate are particularly preferred.

Still another preferred class of olefin polymers used in the process of the present invention are copolymers of an olefin and an acrylic-type acid. Particularly preferred examples of such copolymers are copolymers of an olefin of 2 to 12, preferably 2 to 8, carbon atoms in combination with acrylic acid or methacrylic acid. More preferably, the olefin is an α-olefin of 2 to 12, preferably 2 to 8 carbon atoms, copolymerised with acrylic or methacrylic acid. As in the previous cases, it is particularly preferred that the α-olefin be ethylene thus making it apparent that the most preferred copolymers within the scope of this class of polymers are copolymers of ethylene and acrylic acid and copolymers of ethylene and methacrylic acid.

Yet still another class of polymers within the contemplation of the present invention are ionomers. Particularly preferred ionomers, within the scope of this invention, are ionomers of an olefin and an acrylic acid. Particularly preferred examples of these polymers are ionomers of an α-olefin and an acrylic acid and an α-olefin and methacrylic acid. As in the previous examples, the use of ethylene as the α-olefin in these ionomers is particularly preferred.

Yet another preferred class of olefin polymers are copolymers of an olefin and an unsaturated silane. As in the previous examples, the olefin monomer is preferably one containing 2 to 12 carbon atoms, more preferably 2 to 8 carbon atoms. The olefin of 2 to 12, and more preferably, 2 to 8 carbon atoms, is again preferably an α-olefin.

The unsaturated silane comonomer is preferably an unsaturated alkoxysilane having the structural formula

R-Si(R¹)ₙ(Y)₃₋ₙ

where R is an ethylenically unsaturated hydrocarbon radical having 2 to 6 carbon atoms; R¹ is a hydrocarbon radical having 1 to 10 carbon atoms; Y is an alkoxy group having from 1 to 4 carbon atoms; and n is 0, 1 or 2. Random copolymers of ethylene and unsaturated alkoxysilanes, within the contemplation of the above structural formula, such as vinyltrialkoxysilanes, are known in the art. Methods for making these copolymers are described in U.S. Patent Nos. 3,225,018 and 3,392,156, which patents are incorporated herein by reference.

Copolymers of an olefin-unsaturated alkoxysilane used in the process of this invention are such that the unsaturated alkoxysilane constitutes between about 0.25% to about 20%, more preferably, from about 0.5% to about 10% of the copolymer. It is emphasized that the percentages reported herein are by weight, based on the total weight of the copolymer.

Of the olefin-silane copolymers within the scope of the present invention, the inclusion of a vinyltrialkoxysilane as the silane monomer is particularly preferred. Thus, in the above-recited formula, R is a vinyl group and n is 0. Particularly preferred embodiments are copolymers of ethylene and vinyltrimethoxysilane and copolymers of ethylene and vinyltriethoxysilane. These preferred embodiments are defined in the above structural formula by Y being methoxy and ethoxy, respectively.

Another class of preferred copolymers of an olefin and an unsaturated silane are terpolymers of an α-olefin, a higher α-olefin and an unsaturated silane. Preferably, this class of terpolymers is one of ethylene, propylene and an unsaturated silane. More preferably, the terpolymer is one of ethylene, propylene and an unsaturated alkoxysilane.

It should be appreciated that copolymers of three or more of the comonomers utilized in the above preferred embodiments of the olefin copolymers may be utilized as the polymeric component of the present invention. Indeed, an example of such a copolymer was mentioned earlier in the discussion of the preferred class of terpolymers which includes an olefin, a vinyl ester and an unsaturated acid anhydride.

It should be understood that the first composition of the process of the present invention includes embodiments wherein two or more of the above discussed classes of olefinic polymers are included therein as the polymeric component of the composition of the present invention.

A second component utilized in the first composition of the present invention is carbon black. The first composition of the process of the present invention is restricted to a carbon black concentration of about 0.05% to about 1% by weight, based on the total weight of the composition. It is emphasized that this concentration range excludes the usual carbon black loading provided in commercially available olefinic polymer compositions used for wire and cable applications. As those skilled in the art are aware, the carbon black content of commercially available olefinic polymer compositions, usually employed in the fabrication of electrical wire and cable sheathing, is in the range of about 2 to 3% by weight. As stated above, the maximum concentration of carbon black in the first composition of the laser beam printing process of the present invention is about 1% by weight.

Preferably, the concentration of carbon black in the first composition of the present application is in the range of between about 0.1% and about 0.7% by weight, based on the total weight of the olefinic polymeric composition. More preferably, this concentration range is between about 0.2% by weight to about 0.5% by weight, based on the total weight of the polymeric composition. It is emphasized that this more preferred concentration of carbon black is outside the optimum range suggested in the prior art for use of carbon black in compositions that are deemed laser beam printable.

The carbon black within the contemplation of the olefinic polymer composition has an average particle size of between about 10 nm to about 300 nm. Preferably, the average particle size of the carbon black is in the range of between about 10 nm and about 100 nm. More preferably, the average particle size of the carbon black is in the range of between about 15 nm and about 50 nm.

A third essential component of the first polymeric composition of this invention is at least one organic UV light stabilizer. That component is present in a concentration of between about 0.01% and about 5%, said percent being by weight, based on the total weight of the composition. Preferably, the organic UV light stabilizer is present in a concentration in the range of between about 0.05% and about 3%. More preferably, the concentration of the UV light stabilizer component or components is in the range of between about 0.1% and 1% by weight, based on the total weight of the composition.

This third component of the first olefin polymer-containing composition, the organic UV light stabilizer, may be any of five classes of ultraviolet (UV) inhibitors. These classes are: esters of benzoic acid; benzophenones, preferably hydroxy benzophenones; benzotriazoles, preferably hydroxy benzotriazoles; nickel chelates; and hindered amines. The UV stabilizer may also be compounds which include functionality of two or more of the above and mixtures of compounds of two or more of the above compounds. Of these classes of stabilizers, hindered amines, benzophenones, mixtures thereof and compounds which include two or all three of these classes of UV stabilizers are particularly preferred. Of the five classes of UV stabilizers employed alone, benzotriazoles is most preferred.

Preferred light stabilizer species within the contemplation of these three preferred classes of UV stabilizers include (a) a dimethyl succinate polymer with 4-hydroxy-2,2,6,6-tetramethyl-1-piperidine ethanol, (b) 2-(2'-hydroxy-5'-t-butylphenyl)-3-chlorobenzotriazole, (c) 2-hydroxy-4-m-octoxybenzophenone, (d) N,N'-bis(2,2,6,6-tetramethyl-4-piperidinyl)-1,6-hexanediamine polymer with 2,4,6-trichloro-1,3,5-triazine and 2,4,4-trimethyl-1,2-pentanamine, (e) 2-(3',5'-di-tert-butyl-2'-hydroxyphenyl)-5-chlorobenzotriazole, (f) bis(2,2,6,6-tetramethyl-4-piperidinyl) sebacate, (g) 2H-1-benzopyran-2-one, 7-(2H-naphtho[1,2D]triazol-2-yl)-3-phenyl and mixtures thereof.

In addition to the three essential components, an olefin polymer, carbon black and an ultraviolet light inhibitor, other components may be included in the first composition of this invention. One type of additive commonly employed in olefin polymer-containing compositions is antioxidants. Thus, antioxidants such as hindered phenolics, organic phosphites, thioesters or the like, and combinations thereof may be included in the composition.

Another component that may be included in the composition is a pigment. The pigment may be organic, i.e. a dye or the like, or it may be a metallic oxide, such as titanium dioxide.

Other components that may be included in the composition include flame retardants, fillers, especially hydrated fillers, and processing aids.

The olefin polymeric component of the first composition of the present invention is most often a thermoplastic; however, the olefin polymeric component may also be a thermosetting resin. Indeed, many of the olefinic thermoplastic polymers within the contemplation of the first composition are crosslinkable by chemical and/or radiation methods well known in the art. Thus, it is emphasized that the olefinic polymeric component of the composition of the process of the present invention is thermoplastic or thermosetting.

Among the many plastic-containing articles used in outdoor environments, and thus subject to the degrading effects of ultraviolet light, whose surfaces are often required to be marked, include insulated wire and cable products and jacketed or sheathed products. The former have the plastic material applied directly to and continuously surrounding the conductor whereas the latter have the plastic material applied as a protective overwrap, typically to a bundle of conductors which can include optical fibers and insulated electrical wires and cables. Other plastic articles of this type include conduit such as metal or plastic pipe or tube, which, in turn, is jacketed or sheathed. Such articles are, therefore, excellent candidates for use in the process of the present invention where the plastic of the article to be marked is comprised of a composition within the contemplation of the first composition of the invention and is subjected to laser printing in accordance with the laser printing step.

In another embodiment of the invention, the plastic to be laser printed which, as suggested above, may insulate an electrical conductor or jacket a plurality of optical fibers or insulated electrical conductors, can be a homogeneous composition within the contemplation of the first composition of the present invention or comprise one of the layers of a multi-layered construction. The multi-layered constructions may comprise the insulation or jacketing material in the above-described applications or it may comprise a film or sheet product which is capable of being laser beam marked. Multi-layered constructions may have the laser printable first composition as the outermost layer, i.e., having at least one additional layer disposed under said laser beam printed surface, or the laser printable layer can be disposed under one or more layers of laser light transparent material. While the additional layers may comprise any of the conventional materials employed for constructions of this type, e.g., barrier materials, foils, paper, etc., they are most commonly polymeric compositions. It will also be apparent to those skilled in the art that laser light transparent layers must be of a nature so that indicia produced upon laser treatment are visible therethrough.

The second major embodiment of the process of the present invention involves laser beam printing of a plastic-containing article employed in indoor environments wherein the article is not exposed to sunlight or other sources of ultraviolet light. The distinction between the process of laser beam printing articles employed in outdoor environments and the instant process of laser beam printing articles used in non-ultraviolet light exposed environments is that a distinction in the composition which constitutes the plastic article. In all other respects the two processes are identical.

In the second embodiment of the process of the present invention a second polymeric composition is utilized. The second polymeric composition is identical with the first polymeric composition of the first process but for the non-inclusion of the organic ultraviolet light stabilizer. Thus, all preferred and more preferred embodiments of the second composition are identical to those of the first composition except that they all exclude the organic UV stabilizer.

The following examples are given to illustrate the scope of the present invention. Because these examples are given for illustrative purposes only, the invention should not be deemed limited thereto.

### EXAMPLE 1

### Preparation of LLDPE-Carbon Black Compositions

A series of nine compositions were prepared which comprised LLDPE, specifically, a copolymer of 94 wt. % ethylene and 6 wt. % n-butene, and carbon black having an average particle size of between 18 and 20 nm. These samples ranged in LLDPE concentration from 98.99% to 99.99% and, correspondingly, included between 1.01% and 0.01% carbon black, the percentages being by weight, based on the total weight of the composition.

These samples were prepared by blending the components in a Brabender [trademark] 240 cc hot melt mixer for 8 minutes at a temperature of 150°C. The resulting mixture was compression molded into 6 inch x 6 inch x 75 mil plaques.

A summary of these compositions is included in Table 1 wherein each composition is designated as Composition Nos. 1A to 1I, with each letter designating a higher carbon black concentration.

### EXAMPLE 2

### Preparation of Propylene Copolymer Compositions

A series of five compositions were prepared. Each composition comprised a propylene copolymer and carbon black. The propylene copolymer was a copolymer of propylene present in a concentration of about 93 wt.%, and about 7 wt.% ethylene. The propylene copolymer was further characterized by a melt flow rate of 0.7. The carbon black, with which the propylene copolymer was blended, was the same carbon black used in Example 1.

The five compositions were prepared in accordance with the procedure set forth in Example 1 and similarly processed into the same sized plaques.

These compositions, Compositions 2A to 2E, are summarized in Table 1.

### EXAMPLE 3

### Preparation of High-Density Ethylene Copolymer Compositions

A series of seven compositions were prepared which comprised a copolymer of ethylene and n-hexene having a density of 0.942 and a melt index of 0.7 and the same carbon black utilized in Example 1. Again, as in Examples 1 and 2, the seven compositions included no components other than the olefin polymer, the above-described high-density polyethylene, and carbon black. The compositions varied as the concentration of carbon black was increased from 0.01 wt.% to 1.01 wt.%. These compositions were prepared and formed into plaques in accordance with the procedure set forth in Example 1.

A summary of the seven compositions, denoted Compositions 3A to 3G, is provided in Table 1.

### EXAMPLE 4

### Preparation of Ethylene-Vinyltrialkoxysilane Copolymer Compositions

A series of five compositions, denoted as Samples 4A to 4E, were prepared in accordance with the procedure set forth in Example 1. That is, five samples of an olefin polymer in combination with carbon black were prepared. However, the carbon black content of the five compositions was considerably higher than the previous examples. The five samples constituted between 0.35 wt.% up to 2 wt.% carbon black.

The polymeric component of the compositions of Example 4, which ranged in concentration from a high, in Composition 4A, of 99.65 wt.% to a low, in Composition 4E, of 98.00 wt.%, was a copolymer of 97.6 wt.% ethylene and 2.4 wt.% vinyltriethoxysilane. The composition included 0.3% by weight, based on the total weight of the composition, dibutyl tin dilaurate as a catalyst to crosslink the copolymer.

A summary of the five compositions of Example 4 is included in Table 1.

### EXAMPLE 5

### Preparation of Ethylene-n-Butyl Acrylate Copolymer Compositions

Five additional polymeric compositions were prepared. These compositions were prepared, and thereupon fabricated into plaques, in accordance with the procedure enumerated in Example 1. In all of these compositions, the olefin polymer was a copolymer of 80 wt.% ethylene and 20 wt.% n-butyl acrylate. The second of the two components, which comprised the compositions, was the same carbon black utilized in Example 1. The concentration of the carbon black constituent of the five compositions ranged from 0.05 wt.% to 1.01 wt.%.

A summary of the compositions of Example 5, Compositions 5A to 5E, are provided in Table 1 below.

### EXAMPLE 6

### Laser Beam Printing Process and Analysis

The plaques produced in Examples 1-5 were each laser beam printed. A Nd:YAG laser operating at a 1064 nanometer wavelength was used to print an array of 45 symbols per plaque. The same symbol, @, enclosed in a square, was printed employing five different power levels ranging from 2 to 3 watts at 0% power setting to 25 watts at 100% power setting. Each symbol, printed at five power settings, was furthermore printed at 9 different pulse frequencies ranging from 1 kHz to cw100 (where cw means continuous wave) to provide a total of 45 symbols of the same, above-described design.

Each of these symbols were analyzed to determine the power and frequencies providing the sharpest laser beam symbols. An image analysis system, Global Lab Image [trademark] version 2.10, which is a computer software system for analyzing images, established that the maximum contrast symbol was provided at a power level of 50% and at a frequency of 15 kHz. Thus, the symbol generated at a 50% power level and a frequency of 15 kHz on each of the plaques were analyzed to determine its grey intensity contrast, measured to the nearest percent.

The % grey contrast for the symbol generated at 50% power and 15 kHz frequency is set forth in Table 1. A rating value of 0, 1, 2, 3 or 4 was assigned as a function of % grey contrast. A rating of 0 was assigned when there was no marking of the plaque after exposure to the laser beam. Any value in excess of 0 up to 10% was assigned a value of 1. A contrast between 10% and 20% was assigned a value of 2. A contrast of 20% to 30% was assigned a value of 3. Any value in excess of 30% was assigned a value of 4. A value of 4 is considered very good to excellent, a value of 3 is considered good, a value of 2 is considered fair, a value of 1 is considered poor and, of course, a value of 0, representative of 0% grey intensity, is totally unacceptable.

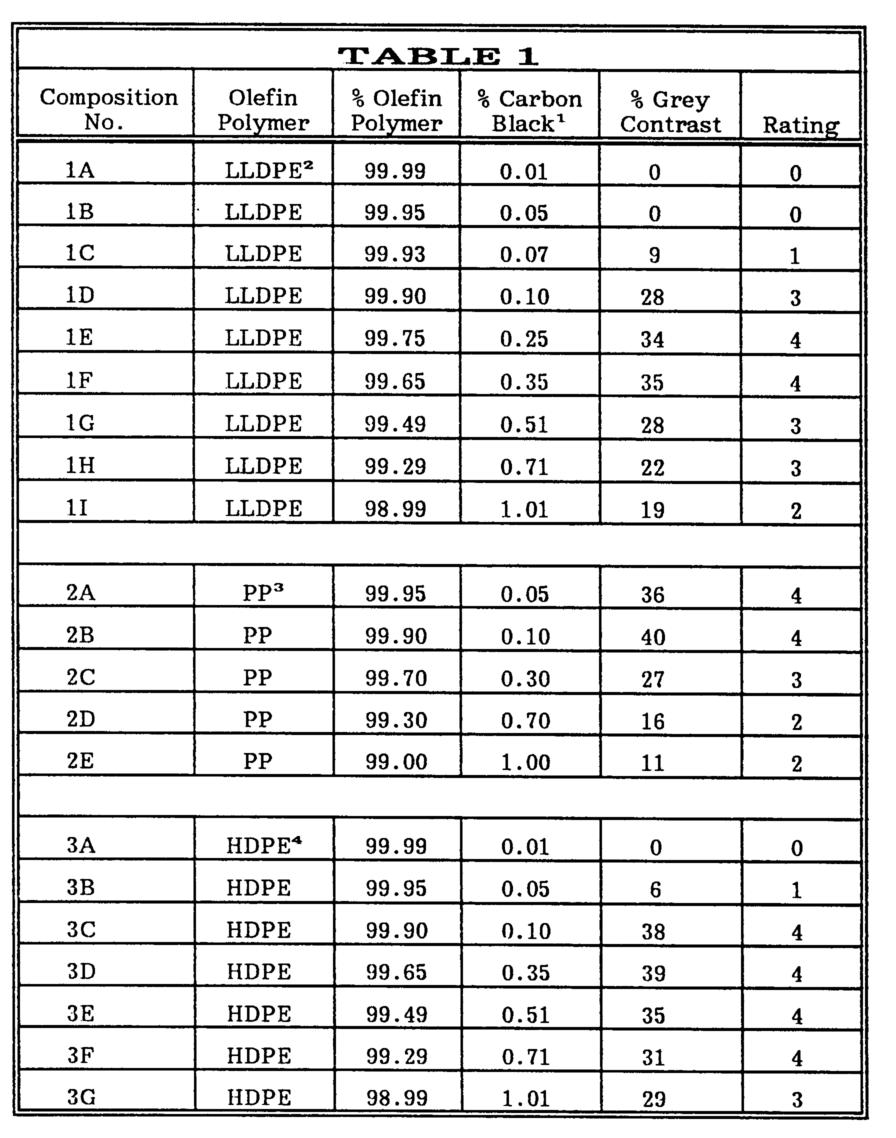

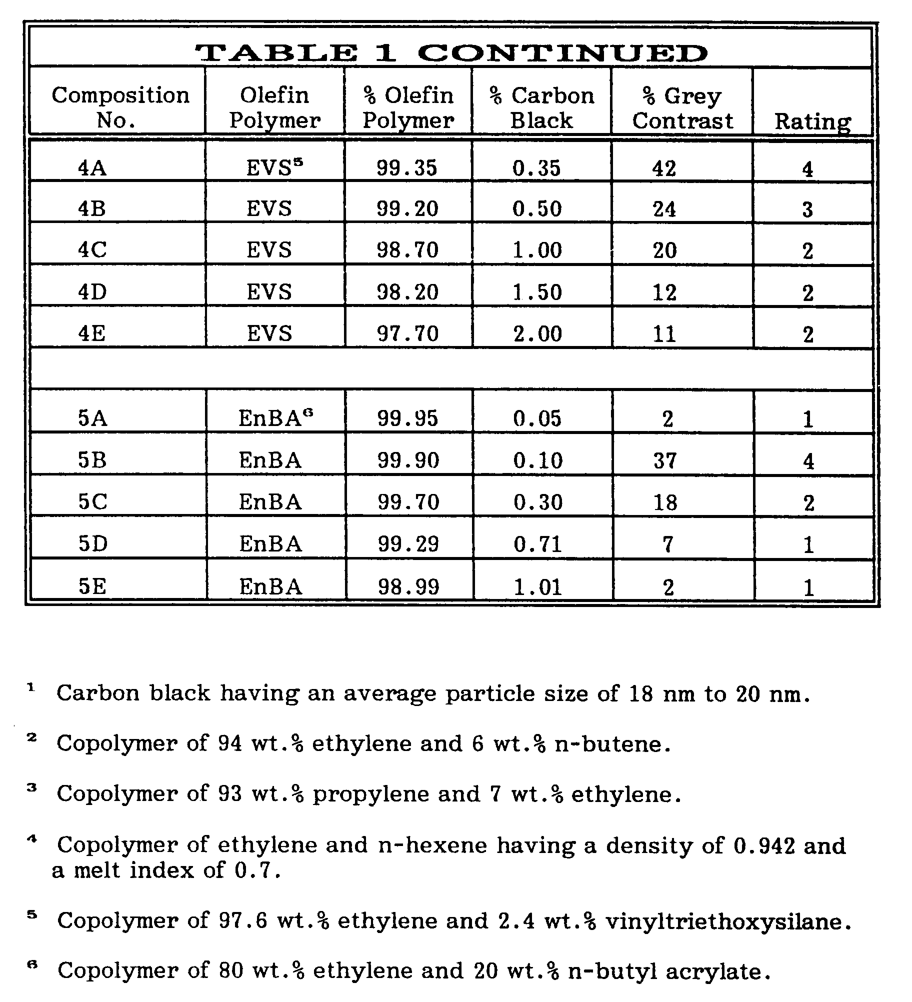

### ANALYSIS OF THE RESULTS SUMMARIZED IN TABLE 1

Examples 1 to 5 establish the optimum concentration of carbon black for obtaining the best laser beam printing results as manifested by percent grey contrast. It is observed that carbon black concentration in the range of between about 0.05 wt.% and about 1.0 wt.% generally produces the best laser beam printing for olefin polymer compositions. Although variations were observed as a function of the specific olefin polymer, it is seen that, as a general rule, a carbon black concentration of 0.1% to 0.7% by weight produces even more optimum results. The best results were observed when the concentration of carbon black was the range of between about 0.2 wt.% and about 0.5 wt.%, based on the total weight of the composition.

### EXAMPLE 7

### Compositions of Linear Low-Density Polyethylene and Carbon Black of Particle Size Range 200-500 nm.

The LLDPE of Example 1 was blended with carbon black to form compositions in accordance with the procedure set forth in Example 1. Five compositions were prepared. These compositions, denoted as Compositions 7A to 7E, varied from 0.35 wt.% to 2.00 wt.% carbon black. The carbon black of these compositions was characterized by a particle size in the range of between 200 nm to 500 nm.

The five compositions were formed into plaques in accordance with Example 1. These plaques were laser beam printed in accordance with the procedure of Example 6. The thus imprinted plaques were evaluated in accordance with the procedure of Example 6.

The results of this printing evaluation, as well as a summary of the compositions of this example, are included in Table 2.

### EXAMPLE 8

### Compositions of Linear Low-Density Polyethylene and Carbon Black of Particle Size Range 60-70 nm.

Five LLDPE-carbon black compositions, having the same concentrations of its two components as the compositions of Example 7, were identically prepared into compositions, fabricated into plaques, laser beam printed and then analyzed. The only distinction between the compositions of this example and the compositions of Example 7 was the particle size of the carbon black. In this example the particle size of the carbon black component of the compositions was in the range of 60 to 70 nanometers.

A summary of the compositions of this example, including an analysis of the quality of the laser beam printing produced on plaques produced therefrom, is included in Table 2.

### EXAMPLE 9

### Compositions of Linear Low-Density Polyethylene and Carbon Black of Particle Size Range 20-30 nm.

The formation of five LLDPE-carbon black compositions, their fabrication into plaques and the laser beam printing and analysis thereof of Examples 7 and 8 was identically reproduced except that the particle size of the carbon black of this example was in the range of 20 to 30 nanometers.

These compositions and their laser beam printing characteristics are tabulated in Table 2.

### EXAMPLE 10

### Compositions of Linear Low-Density Polyethylene and Carbon Black of Particle Size Range 18-20 nm.

Two additional LLDPE-carbon black compositions were prepared in accordance with the procedure of Example 7. These two compositions included carbon black in concentrations of 0.05% and 0.30% by weight. The carbon black of these compositions was identical to the carbon black of Example 1, having a particle size of 18 to 20 nm. These compositions were processed in accordance with the procedure of Example 7.

A summary of these two compositions, along with eight compositions of Example 1, are included in Table 2.

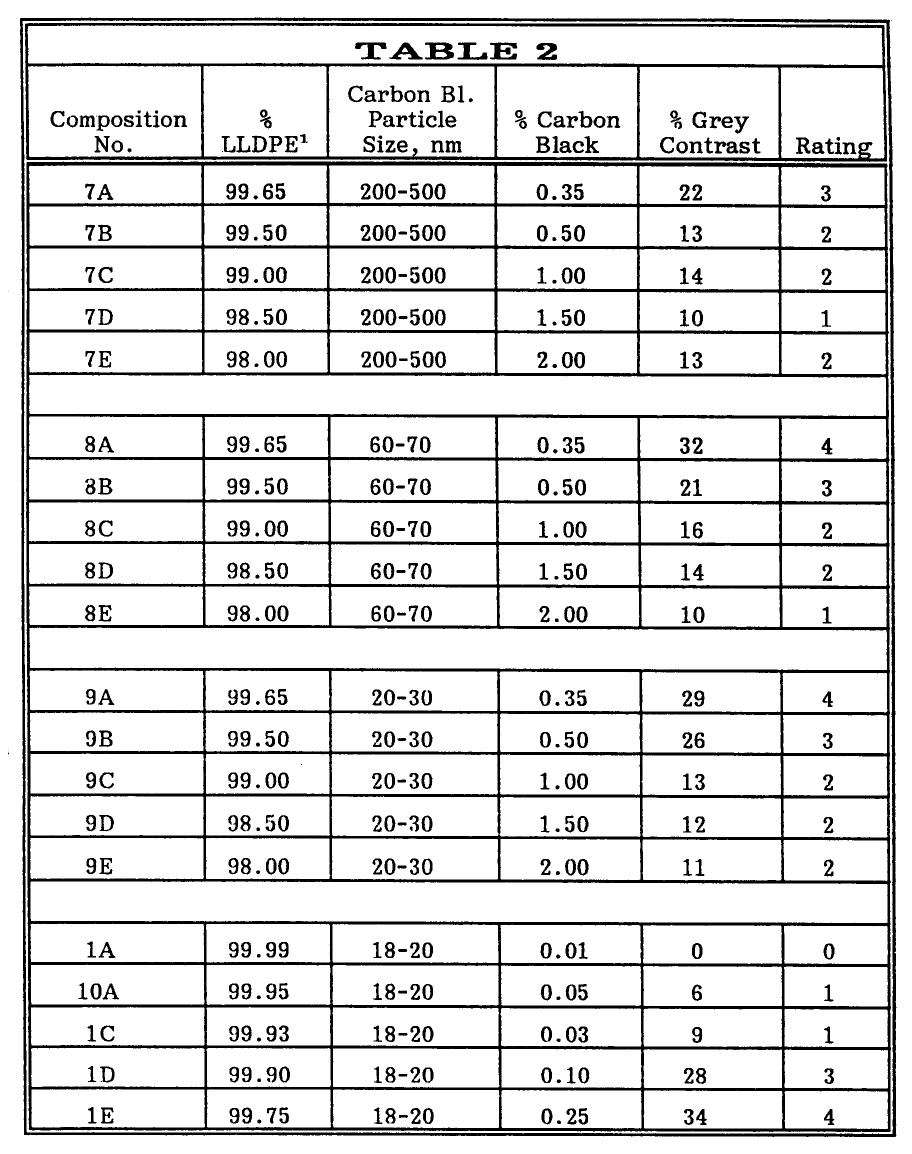

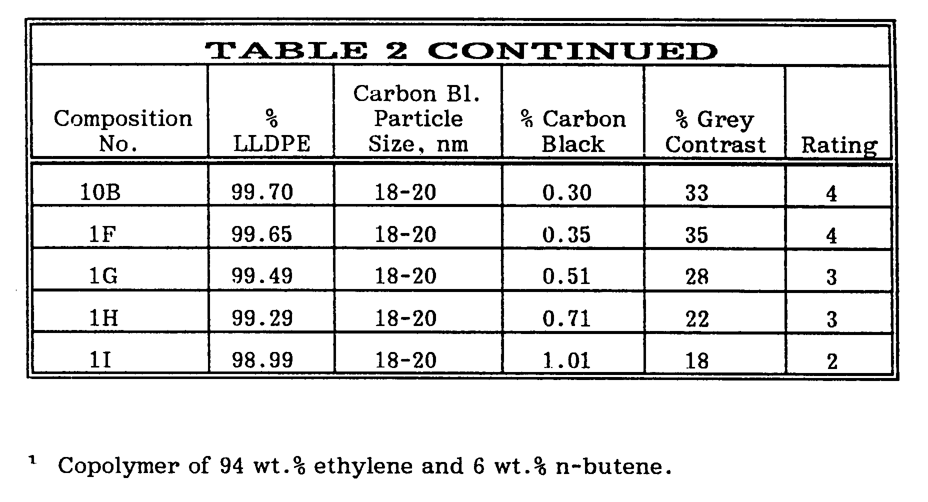

### ANALYSIS OF THE RESULTS SUMMARIZED IN TABLE 2

An analysis of Table 2 indicates that for the same loading of carbon black in an olefin polymer composition which utilizes the identical LLDPE olefin polymer, the optimum particle size range is within the range of between 18 to 20. The use of carbon black having a particle size range of 20 to 30 nm. produced the second best results. As the carbon black particle size range increases to between 60 and 70 nm. in Example 8 and then to between 200 to 500 nm. in Example 7, the % grey contrast and the resultant quality of the laser beam printing decreases.

### EXAMPLE 11

### Compositions of LLDPE, Carbon Black and a First UV Stabilizer

Five compositions which comprised between 98.0 and 98.9 wt.% LLDPE, specifically the copolymer of ethylene and n-butene utilized in Example 1, were prepared by combining the LLDPE with the same carbon black utilized in Example 1, in a concentration ranging from 1.0 to 0.10% by weight and, in addition, 1% by weight of Tinuvin [trademark] 622 which is a dimethyl succinate polymer with 4-hydroxy-2,2,6,6-tetramethyl-1-piperidine ethanol. It is emphasized that these percentages by weight are based on the total weight of the composition.

These compositions were fabricated into plaques in accordance with the procedure of Example 1. They were thereupon laser beam printed and analyzed, to determine their % grey contrast and to assign an appropriate printing rating, in accordance with the procedure of Example 6.

A summary of the five compositions which constitute this example, including their % grey contrast and rating, is provided in Table 3.

### EXAMPLE 12

### Composition of HDPE, Carbon Black and Second UV Stabilizer

Five compositions were prepared, formed into plaques, laser beam printed and analyzed in exact accordance with Example 11 except for the replacement of the olefin polymer of that example, LLDPE, with another olefin polymer, the HDPE utilized in Example 3, and the replacement of the UV stabilizer of Example 11, Tinuvin [trademark] 622, with the UV stabilizer, Tinuvin [trademark] 326. Tinuvin [trademark] 326 is 2-(2'-hydroxy-5'-t-butylphenyl)-3-chlorobenzotriazole.

This example is summarized in Table 3.

### EXAMPLE 13

### Composition of HDPE, Carbon Black and a Third UV Stabilizer

Five compositions were prepared in exact accordance with Example 12 but for the UV stabilizer. In this example, the five compositions included 1% by weight of Cyasorb UV [trademark] 531, which is 2-hydroxy-4-m-octoxybenzophenone, rather than the Tinuvin [trademark] 326 of Example 12. These compositions were fabricated into plaques and tested for laser beam printing effectiveness in accordance with the procedure discussed in Examples 11 and 12.

A summary of the compositions and the test results of Example 13 is included in Table 3.

### EXAMPLE 14

### Compositions of Blend of LLDPE and HDPE, Carbon Black and a Fourth UV Stabilizer

Five compositions were prepared, formed into plaques, laser beam printed and analyzed in exact accordance with Example 11 but for the identity of the olefin polymer and the UV stabilizer. The olefin polymer of the compositions of this example were a mixture of the LLDPE of Example 11 and the HDPE of Examples 12 and 13. The UV stabilizer of the compositions of this example was Leucopure [trademark] EGM which is a stabilizer which includes compounds of the benzophenone and benzotriazole classes. Specifically, Leucopure EGM is 2H-1-benzopyran-2-one, 7-(2H-naphtho[1,2D]-triazol-2-yl)-3-phenyl. The concentrations of the two olefin polymers in the compositions of this example are included in the summary of this example provided in Table 3.

### EXAMPLE 15

### Compositions of Blends of LLDPE and HDPE, Carbon Black and Titanium Dioxide

Four compositions combining a mixture of the same LLDPE and HDPE copolymers included in the compositions of Example 14, albeit in slightly different concentrations, 0.1% to 0.7 wt.% of carbon black, and a UV stabilizer outside the scope of the present invention, titanium dioxide (TiO₂). The TiO₂ component, acting as an inorganic UV stabilizer, had an average particle size of 20 nm and was present in each of the four compositions in a concentration of 1 wt.%.

The compositions of this example were formed into plaques and laser printed and thereafter evaluated in accordance with the procedures of Example 11.

A summary of the compositions of this example, including their test results, is included in Table 3.

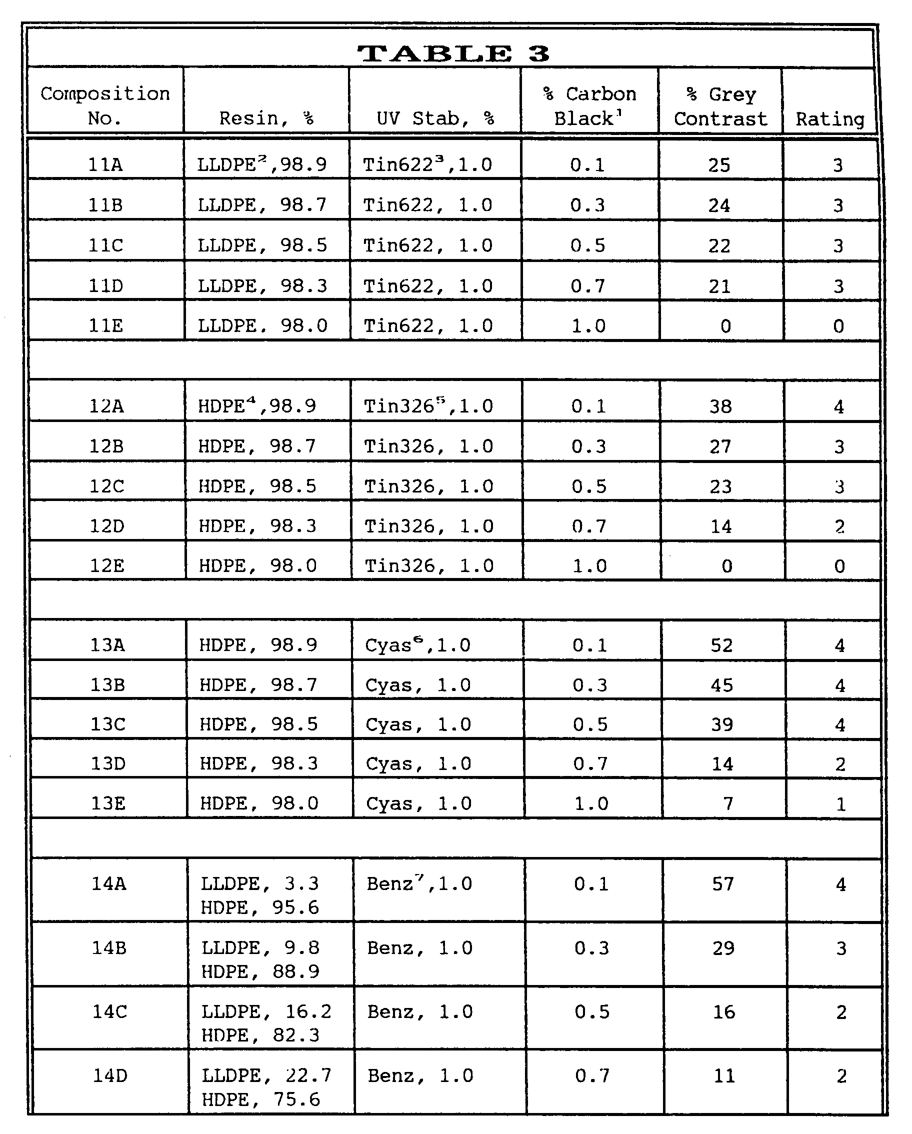

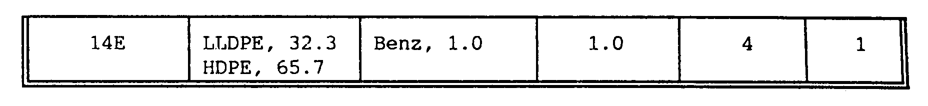

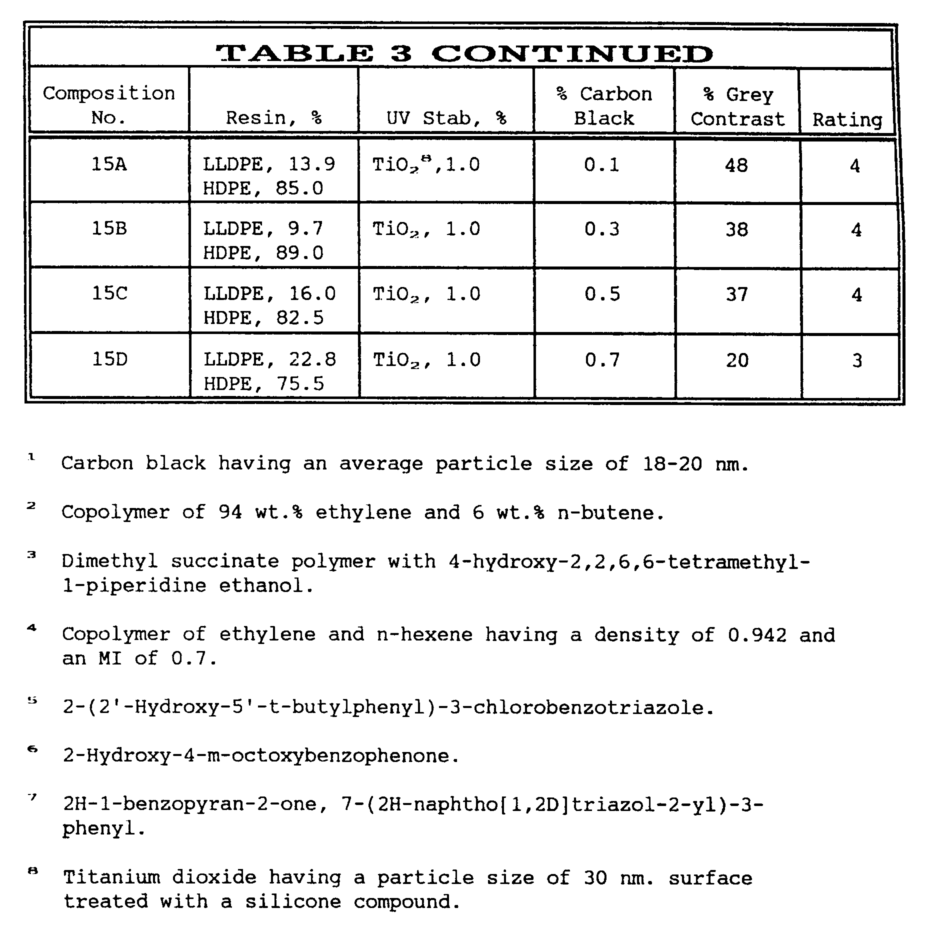

### ANALYSIS OF THE RESULTS SUMMARIZED IN TABLE 3

An analysis of Table 3 establishes that the addition of five ultraviolet light inhibitors to olefin polymer compositions containing the requisite carbon black concentration does not adversely affect the quality of the marking laser beam printed upon its surface. Indeed, an analysis of the five examples summarized in Table 3 establishes that the addition of 1% of any of these well known UV stabilizers, if anything, enhances the quality of laser beam printing, as manifested by % grey contrast.

### EXAMPLE 16

### Effect of UV Stabilizer on Electrical Properties of Olefin Polymer-Containing Compositions

Two compositions were prepared by combining an olefin polymer, the LLDPE of Example 1, with carbon black of the type defined in Example 1. Five other compositions were prepared combining the two above-mentioned components in combination with one or more UV stabilizers.

The seven compositions, whose components and concentrations thereof are set forth in Table 4, were subjected to ASTM Standard Test Procedure D 1531 to determine their dielectric constant. These seven compositions were likewise tested to determine their dissipation factor also in accordance with ASTM Test Procedure D 1531.

A summary of the compositions of this example as well as the results of these tests are included in Table 4.

**TABLE 4**

| Composition No. | % LLDPE¹ | % Carbon Black² | UV Stab, % | Dielect Cons | Dissip. Factor, % |
|---|---|---|---|---|---|
| 16A | 99.7 | 0.3 | -0- | 2.27 | 0.000134 |
| 16B | 98.7 | 0.3 | TiO₂³, 1.0 | 2.28 | 0.000208 |
| 16C | 98.7 | 0.3 | TiO₂⁴, 1.0 | 2.30 | 0.000338 |
| 16D | 99.2 | 0.3 | Chim⁵, 0.5 | 2.25 | 0.000088 |
| 16E | 98.9 | 0.3 | TiO₂³, 0.5 Chim⁵,0.3 | 2.28 | 0.000106 |
| 16F | 98.4 | 0.6 | TiO₂³, 1.0 | 2.32 | 0.000124 |
| 16G⁶ | 97.4 | 2.6 | -0- | 2.45 | 0.000465 |

| | | | | | |
|---|---|---|---|---|---|
| ¹ Copolymer of 94 wt.% ethylene and 6 wt. % n-butene. | | | | | |
| ² Carbon black of average particle size 18-20 nm. | | | | | |
| ³ Titanium dioxide of average particle size 30 nm. surface treated with a silicone compound. | | | | | |
| ⁴ Titanium dioxide of average particle size 30 nm. surface treated with a zirconium compound. | | | | | |
| ⁵ Oligomer with pendant tetramethyl piperidyl groups. | | | | | |

### ANALYSIS OF TABLE 4

An analysis of Table 4 establishes that, on balance, the composition exhibiting the best electrical insulating properties were Composition Nos. 16D and 16E. That both of these compositions included a light stabilizer within the contemplation of the present invention is surprising insofar as these compositions were compared with Composition No. 16A, a control which contained the same concentration of carbon black as Composition Nos. 16D and 16E but included no light stabilizer. It is emphasized that the remaining compositions had in common the absence of a light stabilizer within the contemplation of the composition of this invention.

The compositions of the invention (Nos. 16D and 16E both exhibited better electrical properties, i.e., a lower dissipation factor and low dielectric constant, than any of the other compositions tabulated in Table 4. The significant improvement obtained over a typical cable jacketing composition (16G) of the prior art, composition 16G, containing 2.6% carbon black is particularly noteworthy. Those skilled in the art are aware that the lower the dielectric constant and dissipation factor of a material the better suited it is as an electrical insulator.

### EXAMPLE 17

### Evaluation of Properties of Light Stabilized Olefin Polymer-Containing Compositions

The compositions prepared in accordance with Example 16 were tested to determine their ultraviolet light inhibition properties by determining their tensile strength in lb/sq.in. (psi) and their percent elongation at break upon formation, after UV light exposure of 1000 hrs., 2000 hrs., 3000 hrs. and 4000 hrs. in accordance with ASTM standard Test Procedure No. G-26.

The results of these experiments are tabulated in Table 5 wherein the compositions and their test results are summarized.

In addition to the samples designated as Samples 16A to 16G, another set of compositions, designated as Composition Nos. 17A to 17F, were prepared which included the same LLDPE utilized in Example 16, the same carbon black utilized in Example 16 and three UV stabilizers within the contemplation of the present invention, present in two concentrations, 0.3 wt.% and 0.5 wt.%, said percentages based on the total weight of the composition. These compositions were also tested in accordance with ASTM Standard Test Procedure No. G-26. However, as of the filing date, data was available only for up to 2000 hours.

The compositions prepared and tested in accordance with the present example are summarized in Table 5.

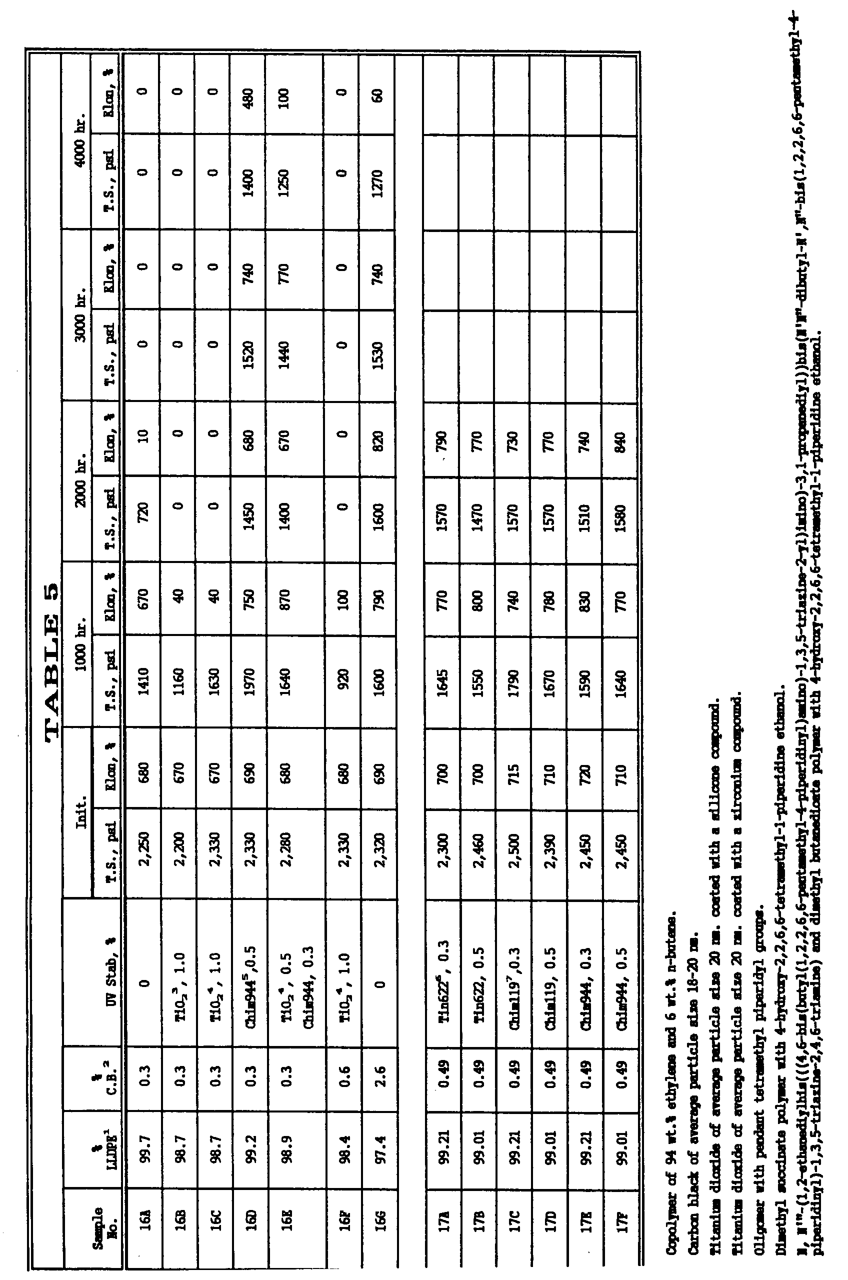

### ANALYSIS OF THE RESULTS SUMMARIZED IN TABLE 5

An analysis of Table 5 establishes that the use of UV stabilizers within the contemplation of the present invention, in combination with 0.3 wt.% carbon black and 0.5 wt.% carbon black, produces compositions which inhibit the detrimental effects of UV light after up to 4000 hours of exposure. It is noted that the compositions denoted 17A to 17F have not yet been tested beyond 2000 hours. However, their 2000 hr. values suggest that all of them provide equivalent UV stabilization protection to that produced by the prior art compositions commonly employed in cable sheathing applications. That is, the results of all examples within the contemplation of the present invention, although of much lower carbon black concentration than those of the cable sheathings of the prior art, produce equivalent UV stabilization results.

Attention is directed to the equivalency and even better results of Compositions 16D and 16E, within the contemplation of the present invention, compared to Composition 16G, a typical cable sheathing composition of the prior art.

It is noted that surprisingly UV stabilizers outside the scope of the present invention, i.e. those containing titanium dioxide without any organic UV stabilizer within the contemplation of this invention, are unsuccessful. Similarly, compositions having a carbon black concentration within the contemplation of the present invention but without a UV stabilizer produce unsuccessful results.

### EXAMPLE 18

### Coextrusion and Laser Beam Printing of Plastic Sheet

A series of two-ply coextruded sheets which constituted an "inner" 35 mil thick layer, which in each case constituted a composition including the LLDPE copolymer defined in Example 1 (94 wt.% ethylene and 6 wt.% n-butene), present in an amount of 97.4%, and carbon black present in a concentration of 2.6%, said percentages being by weight, based on the total weight of the composition, were formed by coextruding the 35 mil thick layer with three different 1 mil thick "outer" layers.

The first 1 mil outer layer was the same LLDPE copolymer used as the inner layer producing what amounted to an "uncoated" surface. The second 1 mil outer layer, coextruded with the 35 mil thick inner layer, was a composition of the same LLDPE copolymer (99.7%) in combination with 0.3% carbon black, said percentages by weight, based on the total weight of the outer layer composition. The third 1 mil outer layer was a composition of 99.2% LLDPE; 0.3% carbon black; and 0.5% Chimassorb [trademark] 944 where the percentages were by weight, based on the total weight of the composition.

The three sheets, Samples 18A, 18B and 18C, were each laser beam printed in accordance with the method described in Example 6. The results of this marking, evaluated in accordance with % grey contrast, as described in Example 6, is included in Table 6.

### EXAMPLE 19

### Two Ply Bonded Laser Beam Printed Compositions

Three compression molded sheets, each consisting of an "inner" layer 35 mil thick and a similarly thick 35 mil outer layer, were each separately formed and bonded together under the influence of elevated temperature.

The three plaques, denoted as Sample Nos. 19A, 19B and 19C, included a common "inner" layer formed of a composition which comprised 97.4% LLDPE (94 wt.% ethylene and 6 wt.% n-butene) and 2.6% carbon black, where the percentages were by weight, based on the total weight of the composition. In Sample 19A the outer layer was LLDPE (the same copolymer employed in the inner layer) without any additional component. In Sample No. 19B the outer layer was a composition which included 99.7% of the same LLDPE and 0.3% carbon black. The plaque of Sample No. 19C was 99.2% LLDPE; 0.3% carbon black; and 0.5% Chimassorb [trademark] 944, all of the above percentages being by weight, based on the total weight of the compositions.

The three samples were laser beam printed and evaluated for % grey contrast in accordance with the test method described in Example 6. The results of these tests are summarized in Table 6.

**TABLE 6**

| Sample No. | Inner Ply. | Thickness mils. | Outer Ply. | Thickness mils | % Grey Contrast | Rating |
|---|---|---|---|---|---|---|
| 18A | 97.4% LLDPE | 35 | 100% LLDPE | 1 | 0 | 0 |
| | 2.6% CB | | | | | |
| 18B | 97.4% LLDPE | 35 | 99.7% LLDPE | 1 | 18 | 2 |
| | 2.6% CB | | 0.3% CB | | | |
| 18C | 97.4% LLDPE | 35 | 99.2% LLDPE | 1 | 33 | 4 |
| | 2.6% CB | | 0.3% CB | | | |
| | | | 0.5% Chim944 | | | |
| | | | | | | |
| 19A | 97.4% LLDPE | 35 | 100% LLDPE | 35 | 0 | 0 |
| | 2.6% CB | | | | | |
| 19B | 97.4% LLDPE | 35 | 99.7% LLDPE | 35 | 28 | 3 |
| | 2.6% CB | | 0.3% CB | | | |
| 19C | 97.4% LLDPE | 35 | 99.2% LLDPE | 35 | 24 | 3 |
| | 2.6% CB | | 0.3% CB | | | |
| | | | 0.5% Chim944 | | | |

### ANALYSIS OF TABLE 6

The data in Table 6 establishes that the process of the earlier examples, which involve laser beam printing of unitary plastic compositions works equally as well in a process in which the composition of the outer ply is within the scope of the instant invention even if one or more inner plies are not.

The above embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

## Claims

1. A process of laser beam printing a plastic article comprising laser beam printing, under laser beam printing conditions, a plastic article formed of a laser beam printable polymeric composition which includes an olefin-containing polymer; between about 0.05% and about 1% carbon black; and between about 0.01% and about 5% of at least one organic ultraviolet light stabilizer, said percentages being by weight, based on the total weight of the composition.

2. The process in accordance with Claim 1 wherein said carbon black has an average particle size in the range of between about 10 nanometers and about 300 nanometers.

3. The process in accordance with Claim 1 or 2 wherein said carbon black is present in the concentration of between about 0.1% and about 0.7%.

4. The process in accordance with any one of Claims 1-3 wherein said olefin polymer is selected from the group consisting of an olefin homopolymer and a copolymer of an olefin and at least one copolymerizable comonomer.

5. The process in accordance with any one of Claims 1-4 wherein said olefin polymer is selected from the group consisting of a homopolymer of an olefin containing 2 to 12 carbon atoms, a copolymer of an olefin containing 2 to 12 carbon atoms and a copolymerizable comonomer.

6. The process in accordance with any one of Claims 1-5 wherein said olefin polymer is selected from the group consisting of a homopolymer of an α-olefin containing 2 to 8 carbon atoms, a copolymer of an α-olefin containing 2 to 8 carbon atoms and at least one copolymerizable comonomer.

7. The process in accordance with any one of Claims 1-6 wherein said olefin polymer is an α-olefin homopolymer selected from the group consisting of polyethylene, polypropylene and polybutene.

8. The process in accordance with any one of Claims 1-7 wherein said olefin polymer is a copolymer of ethylene and an α-olefin of 3 to 8 carbon atoms.

9. The process in accordance with Claim 8 wherein said copolymer is selected from the group consisting of a copolymer of ethylene and propylene, an ethylene-propylene rubber, a copolymer of ethylene and n-butene, a copolymer of ethylene and n-hexene, a copolymer of ethylene and n-octene and a terpolymer of ethylene, propylene and a diene monomer.

10. The process in accordance with any one of Claims 1-6 wherein said olefin polymer is selected from the group consisting of a copolymer of ethylene and a vinyl ester, a copolymer of ethylene and an unsaturated silane, a copolymer of ethylene and an acrylic acid and a copolymer of ethylene and an acrylate ester.

11. The process in accordance with Claim 10 wherein said olefin polymer is selected from the group consisting of a copolymer of ethylene and vinyl acetate, a copolymer of ethylene and vinyl alcohol, a copolymer of ethylene and vinyl butyrate, a copolymer of ethylene and n-butyl acrylate, a copolymer of ethylene and vinyl triethoxysilane, a copolymer of ethylene and acrylic acid, a copolymer of ethylene and methacrylic acid, a copolymer of ethylene and methyl acrylate and a copolymer of ethylene and methyl methacrylate.

12. The process in accordance with any one of Claims 1-6 wherein said olefin polymer is selected from the group consisting of an ionomer of an α-olefin and acrylic acid and an ionomer of an α-olefin and methacrylic acid.

13. The process in accordance with any one of Claims 1-12 wherein said organic light stabilizer is selected from the group consisting of esters of benzoic acid, hydroxy benzophenones, hydroxy benzotriazoles, nickel chelates, hindered amines, mixtures thereof and compounds which include functionality of two or more of the above.

14. The process in accordance with any one of Claims 1-13 wherein said organic ultraviolet light stabilizer is selected from the group consisting of (a) 2-(3',5'-di-tert-butyl-2'-hydroxyphenyl)-5-chlorobenzotriazole, (b) dimethyl succinate polymer with 4-hydroxy-2,2,6,6-tetramethyl-1-piperidine ethanol, (c) 2-hydroxy-4-n-octoxybenzophenone, (d) N,N'-bis(2,2,6,6-tetramethyl-4-piperidinyl)-1,6-hexanediamine polymer with 2,4,6-trichloro-1,3,5-triazine and 2,4-trimethyl-1,2-pentanamine, (e) 2-(2'-hydroxy-5'-t-butylphenyl)-3-chlorobenzotriazole, (f) bis(2,2,6,6-tetramethyl-4-piperidinyl)sebacate, (g) 2H-1-benzopyran-2-one, 7-(2H-naphtho[1,2D]triazol-2-yl)-3-phenyl and mixtures thereof.

15. A process of laser beam printing a plastic article comprising laser beam printing, under laser beam printing conditions, a multilayered article which includes a surface layer formed of a polymeric composition selected from the group consisting of (a) a first polymeric composition, said first polymeric composition including an olefin-containing polymer, between about 0.05% and about 1% carbon black and between about 0.01% and about 5% of at least one organic ultraviolet light stabilizer, said percentages being by weight, based on the total weight of said composition, and (b) a second polymeric composition, said second polymeric composition characterized by not being identical to said first polymeric composition and by being laser beam transparent with the proviso that if said surface layer is formed of said second polymeric composition the article includes a layer, disposed beneath said surface layer, formed of said first polymeric composition.

16. The process in accordance with Claim 15 wherein said first polymeric composition includes an α-olefin-containing polymer; between about 0.05% and about 1% carbon black having an average particle size of between about 10 nanometers and about 300 nanometers; and between about 0.05% and about 3% organic ultraviolet light stabilizer, said percentage being by weight, based on the total weight of the composition.

17. The process in accordance with Claim 16 wherein said α-olefin-containing polymer is selected from the group consisting of an ethylene homopolymer, a propylene homopolymer, a copolymer of ethylene and a higher α-olefin, a terpolymer of ethylene, a higher α-olefin and a third copolymerizable monomer, a copolymer of ethylene and an acrylic acid, a copolymer of ethylene and methacrylic acid, a copolymer of ethylene and an acrylate ester, a copolymer of ethylene and methacrylate ester, a copolymer of ethylene and a vinyl ester, a copolymer of ethylene and an unsaturated silane and mixtures thereof.

18. The process in accordance with Claim 17 wherein said α-olefin-containing polymer is selected from the group consisting of an ethylene homopolymer, a propylene homopolymer, a copolymer of ethylene and propylene, a copolymer of ethylene and n-butene and a copolymer of ethylene and n-hexene and mixtures there.

19. The process in accordance with any one of Claims 15-18 wherein said carbon black is present in a concentration of between about 0.1% and about 0.7% and has an average particle size in the range of between about 12 nanometers and about 50 nanometers.

20. The process in accordance with any one of Claims 15-19 wherein said organic ultraviolet light stabilizer is selected from the group consisting of hydroxy benzophenones, hydroxy benzotriazoles and hindered amines.

21. The process in accordance with any one of Claims 15-20 wherein said organic ultraviolet light stabilizer is selected from the group consisting of (a) 2-(3',5'-di-tert-butyl-2'-hydroxyphenyl)-5-chlorobenzotriazole, (b) dimethyl succinate polymer with 4-hydroxy-2,2,6,6-tetramethyl-1-piperidine ethanol, (c) 2-hydroxy-4-n-octoxybenzophenone, (d) N,N'-bis(2,2,6,6-teramethyl-4-piperidinyl)-1,6-hexanediamine polymer with 2,4,6-trichloro-1,3,5-triazine and 2,4-trimethyl-1,2-pentanamine, (e) 2-(2'-hydroxy-5'-t-butylphenyl-3-chlorobenzotriazole, (f) bis(2,2,6,6-tetramethyl-4-piperidinyl)sebacate, (g) 2H-1-benzopyran-2-one, 7-(2H-naptho[1,2D]triazol-2-yl)-3-phenyl and mixtures thereof.

22. A process of insulating an electrical conductor with a laser beam printable plastic composition comprising covering an electrical conductor with a first polymeric composition which comprises an olefin-containing polymer; between about 0.05% and about 1% carbon black; and between about 0.05% and about 5% of at least one organic ultraviolet light stabilizer, said percentages being by weight, based on the total weight of the composition.

23. The process in accordance with Claim 22 wherein said first polymeric composition is provided as a unitary insulation, a surface layer of a multilayered insulation, or an intermediate layer of a multilayered insulation, said intermediate layer disposed beneath a surface layer of a second polymeric composition, said second polymeric composition being laser beam transparent and being different from said first polymeric composition.

24. A process of jacketing optical fiber, electrically conductive wire or electrically conductive cable with a laser beam printable plastic composition comprising bundling a plurality of optical fibers, individually insulated electrically conductive wire or individually insulated electrically conductive cable to form a bundle; and covering said bundle with a laser beam printable first polymeric composition comprising an olefin-containing polymer, between about 0.05% and about 1% carbon black and between about 0.05% and about 5% of at least one organic ultraviolet light stabilizer, said percentages being by weight, based on the total weight of the composition.

25. The process in accordance with Claim 24 wherein said jacket is formed solely of said first polymeric composition.

26. The process in accordance with Claim 24 or 25 wherein said first polymeric composition is provided as a surface layer of said jacket.

27. The process in accordance with Claim 24 wherein said first polymeric composition is provided as a second layer of said jacket, disposed beneath a surface layer formed of a second polymeric composition, said second polymeric composition being laser beam transparent and different from said first polymeric composition.

28. An electrically conductive assembly comprising an electrical conductor insulated with a laser beam printable sheathing comprising a first polymeric composition, said first polymeric composition comprising an olefin-containing polymer; between about 0.05% and about 1% carbon black; and between about 0.05% and about 5% of at least one organic ultraviolet light stabilizer, said percentages being by weight, based on the total weight of the composition.

29. A conductive assembly comprising a bundle of a plurality of conductors, said conductors selected from the group consisting of optical fibers, electrically insulated conductive wire, electrically insulated conductive cable and combinations thereof, and a sheathing covering said bundle, said sheathing comprising a laser beam printable first polymeric composition, said first polymeric composition comprising an olefin-containing polymer; between about 0.05% and about 1% carbon black; and between about 0.05% and about 5% of at least one organic ultraviolet light stabilizer, said percentages being by weight, based on the total weight of the composition.

30. The assembly in accordance with Claims 28 or 29 wherein said first polymeric composition is provided as a unitary sheathing, a surface layer of a multilayered sheathing, or a second layer of a multilayered sheathing, said second layer disposed beneath a surface layer of a laser beam transparent second polymeric composition, different from said first polymeric composition.

31. A process of laser beam printing a plastic article comprising laser beam printing, under laser beam printing conditions, an article comprising a laser beam printable polymeric composition which includes an olefin-containing polymer and between about 0.05% and about 1% carbon black, said percentages being by weight, based on the total weight of said composition.

32. The process in accordance with Claim 31 wherein said olefin of said olefin-containing polymer is an α-olefin and said carbon black is present in a concentration of between about 0.1% and about 0.7% and has an average particle size of between about 10 nanometers and about 300 nanometers.

33. The process in accordance with Claim 31 or 32 wherein said article is formed of said laser beam printable composition.

34. The process in accordance with Claim 31 or 32 wherein said article includes a surface layer of said laser beam printable composition and an inner layer, disposed beneath said surface layer, of non-laser beam printable composition.

35. A process in accordance with Claim 31 or 32 wherein said article includes a surface layer of a laser beam transparent polymeric composition and an intermediate layer, disposed beneath said surface layer, of said laser beam printable polymer composition.

36. The process in accordance with Claim 31 wherein said carbon black has an average particle size of between about 10 nanometers and about 300 nanometers.

37. The process in accordance with any one of Claims 31-36 wherein said olefin-containing polymer is copolymer of an alpha-olefin containing two to eight carbon atoms and at leat one copolymerizable comonomer.

38. The process in accordance with any one of Claims 31-37 wherein said olefin-containing polymer is a copolymer of ethylene and an alpha-olefin having three to eight carbon atoms.

39. The process in accordance with any one of Claims 31-38 wherein said olefin-containing polymer is selected from the group consisting of a copolymer of ethylene and n-butene, a copolymer of ethylene and n-hexene and a copolymer of ethylene and n-octene.

40. The process in accordance with any one of Claims 31-37 wherein said carbon black has an average particle size in the range of between about 12 nanometers and about 50 nanometers and said olefin-containing copolymer is selected from the group consisting of a copolymer of ethylene and n-butene and a copolymer of ethylene and n-hexene.

41. A polymeric composition comprising an olefin-containing polymer and between about 0.05% and about 1% carbon black, said percentages being by weight, based on the total weight of the composition.

42. The composition in accordance with Claim 41 wherein said carbon black has an average particle size in the range of between about 10 nanometers and about 300 nanometers.

43. The composition in accordance with Claim 41 or 42 wherein said olefin-containing polymer is a copolymer of an alpha-olefin containing two to eight carbon atoms and a copolymerizable comonomer.

44. The composition in accordance with any one of Claims 41-43 wherein said olefin-containing polymer is a copolymer of ethylene and an alpha-olefin containing three to eight carbon atoms.

45. The composition in accordance with any one of Claims 41-44 wherein said olefin-containing polymer is selected from the group consisting of a copolymer of ethylene and n-butene, a copolymer of ethylene and n-hexene and a copolymer of ethylene and n-octene.

46. The composition in accordance with any one of Clams 41-45 wherein said carbon black has an average particle size in the range of between 12 nanometers and about 50 nanometers and said olefin-containing polymer is selected from the group consisting of a copolymer ethylene and n-butene and a copolymer of ethylene and n-hexene.
